(19) Europäisches Patentamt

European Patent Office

Office européen des brevets

(11) **EP 1 233 483 A1**

(12) **EUROPEAN PATENT APPLICATION**

(43) Date of publication:
**21.08.2002 Bulletin 2002/34**

(51) Int Cl.⁷: $H01S\ 3/00$, $G02B\ 5/00$

(21) Application number: **01870035.1**

(22) Date of filing: **19.02.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **VDM Laser Optics**
**9810 Eke-Nazareth (BE)**

(72) Inventors:
• **Muys, Peter Frans Maria**
**9030 Gent (BE)**

• **Van Damme, Eefje Therese**
**8000 Brugge (BE)**

(74) Representative:
**Brants, Johan Philippe Emile et al**
**De Clercq, Brants & Partner cv**
**Edgard Gevaertdreef 10a**
**9830 Sint-Martens-Latem (BE)**

(54) **Method and device for generating an optical invariant field**

(57) The present invention relates to the propagation of waves. In particular, the present invention relates to a device for the propagation of waves comprising two plates each having a reflecting surface, said plates lined so that said reflecting surfaces face each other to form a resonator allowing waves to pass back and forth between said reflecting surfaces, said apparatus further comprising an active amplifying medium positioned on the axis between the reflecting surfaces, said apparatus characterized in that at least one of said plates has a reflecting surface in the shape of an axicon.

**Figure 1b**

EP 1 233 483 A1

## Description

FIELD OF THE INVENTION

The present invention relates to the propagation of waves. In particular, the present invention relates to the direct generation of non-diffracting laser beams and the propagation of these beams.

BACKGROUND OF THE INVENTION

Because of diffraction effects, a conventional beam of optical waves diverges as it travels away from the source, its on-axis intensity decreasing approximately as the square of distance from the source.

A well known and studied intensity distribution is the Gaussian beam. The Gaussian beam diverges and thereby grows weaker in intensity with distance.

It is known that laser beams having a Gaussian intensity distribution upon their generation can be transformed into beams having a Bessel intensity distribution for propagation. Bessel beams are non-diffracting beams also called optical invariant beams. Recently, Bessel beams ($J_o$ beams or non-diffracting beams) attract attention as laser beam having a very deep depth of focus and a relatively small diameter of spot. The details about Bessel beam are described for example in Durnin: J. Opt. Soc. Am. A, vol. 4, No. 4, p. 651 (1987). The Bessel beams have a feature that the light amplitude distribution is proportional to the zero-order Bessel function of the first kind in the cross section normal to the propagation direction. In detail, the amplitude distribution U(r) of Bessel beam may be expressed by the following equation with r being a distance to the optical axis.

$$U(r) = AJ_o(\alpha r)$$

In the above equation A and $\alpha$ are constants.

Present methods for obtaining Bessel beams, only however result in approximations of Bessel beams. Therefore, although a laser beam having a Bessel intensity distribution has lower divergence than a Gaussian beam, obtaining the Bessel distribution from the Gaussian beam results in substantial losses of optical intensity before any significant propagation begins. US 5,245,619 describes a way to generate a beam in which the intensity distribution approximates a single non-zero order Bessel function, but with only 50% of the original beam energy.

Another method is disclosed in US 6,016,223 wherein two Bessel beams mutually different in ring diameter or in position of submaxima superimpose on eachother.

The present invention relates to an apparatus for directly generating a beam of optical waves with Bessel intensity distribution in a resonator. It is an object of the present invention that the directly generated Bessel beam has no significant loss of intensity.

SUMMARY OF THE INVENTION

The present invention relates to a method and apparatus for propagation of optical waves. The apparatus comprises two optical plates each having a reflecting surface. The optical plates are lined up so that the reflecting surfaces face each other and the waves are allowed to echo between the reflecting surfaces. The apparatus is further characterized in that at least one of the optical plates has a reflecting surface in the shape of an axicon, i.e. a flat cone shape. This optical plate is positioned at the incident wave side. The intensity distribution of the waves within the area formed between the two optical plates is invariant.

An essential feature of the invention is the use of a resonator having at least one reflective axicon. A resonator is defined as an optical configuration (mirrors, lenses, etc...) in which optical waves can make a round-trip, resulting in a spatial distribution of the optical waves identical to the initial spatial distribution.

The most simple resonator is composed of two concave spherical mirrors looking to each other. In general the cavity is near a mirror which is preferably 100% reflective and an output coupler which is in general a particle reflector. In such a resonator, a Gaussian optical wave is self-reproducing upon subsequent round-trips. An essential feature of such a Gaussian beam is that it diverges when it propagates through free space (i.e. after leaving the resonator through the partial reflector). If one mirror is now replaced by a reflective axicon, the self-reproducing optical wave distribution is, based on Maxwell's electromagnetic field equations, described by a Bessel function. This field distribution has the unique property to be independent of the longitudinal propagation distance, over a certain well-defined interval. The beam is said in this case to be non-diffracting.

In a preferential embodiment this invariant field is achieved when the axicon is a total reflector and the optical plate is a partial reflector. The characteristics of the resonator are determined by the resonance condition for one round-trip $L = \dfrac{r}{2(n-1)\gamma}$, whereby L is the axial distance of the cavity, r is the size of the axicon, y is its apex angle and n its refractive index.

A number of different resonator implementations can be identified, by replacing the reflective axicon by a transmittive, by using two axicons, by considering not just one round-trip self-reproducibility, but multiple round-trips, by integrating roof-top prisms, etc... They all share the common property to rely on an axicon as resonator element, to transform an incoming field distribution in an outgoing conical wave.

The present invention directly generates a Bessel beam using a laser configuration with high efficiency. The present invention has great industrial advantages e.g. in the metal cutting industry where thicker sheets of metal can be cut even more accurately than was previously possible.

BRIEF DESCRIPTION OF THE DRAWINGS

Figure 1a represents a transformation of a plane wave in a conical wave by propagation through an axicon.
Figure 1b is a resonator generating a Bessel beam.
Figure 2a is a Kepler telescope.
Figure 2b is a folded resonator version of Kepler telescope.
Figure 3 is an axicon telescope.
Figure 4 is a resonator version of the axicon telescope.
Figure 5 represents an annular beam incident on an axicon telescope.
Figure 6 is an annular resonator version of an axicon telescope.
Figure 7 shows an optimized annular configuration.
Figure 8 shows the steady-state intensity.
Figure 9 shows a transverse profile of the steady-state solution.

DETAILED DESCRIPTION OF THE INVENTION

Embodiments of the invention will be described with reference to the attached illustrative drawings. The drawings are schematic and should not be construed as accurately depicting the shapes, sizes or positional relationships of the component elements, or as limiting the scope of the invention.

A Bessel beam is viewed as a transverse standing wave, formed in the interference region between incoming and outgoing conical waves. Based on this interpretation the present invention relates to an optical cavity that can support a Bessel beam, in other words a cavity that possesses Bessel-beam modes and the output are also Bessel beams.

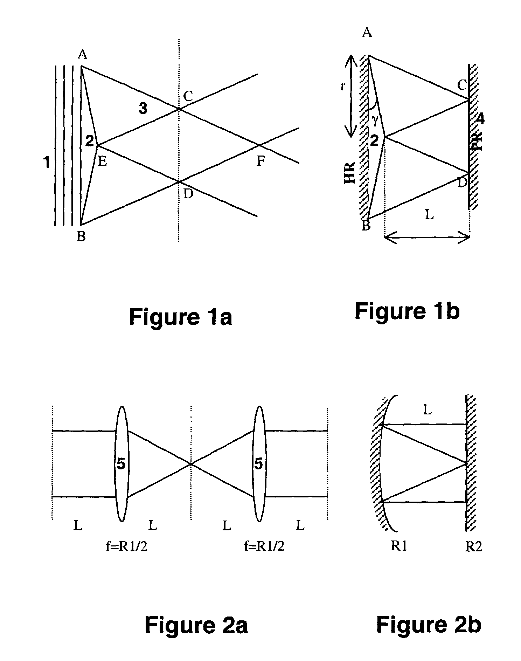

It is known that an axicon can transform an incoming plane wave in a Bessel beam. In Figure 1a a plane wave 1 is incident from the left on the base plane AB of such an axicon 2. This axicon 2 is assumed to be thin so that AE = r, r being the mirror size. Moreover, in the subsequent paragraphs the paraxial approximation is adopted. This means that the wave predominantly propagates along its central optical axis; in other words its divergence is finite but small. The plane wave 1 is transformed into a conical wave 3, exhibiting an interference zone CFDE. In this zone CFDE the Bessel beam exists. If a mirror would be installed in the plane CD, then the Bessel beam is reflected upon itself. This observation leads to the realization of the Bessel beam using a resonator.

Figure 1b represents a resonator generating a Bessel beam. The resonator cavity comprises two optical elements, a rear mirror 2 in the shape of a flat cone, also named an axicon, and a front mirror 4. Within a resonator an optical wave is self-reproducing after one round-trip, whereby the resonator length L can be determined mathematically to realize the resonance condition.

The base plane AB of the axicon 2 is made highly reflective, whereas the output plane CD is partially reflective. The field is self-reproducing in one round-trip. The resonance condition for one round-trip is $L = \frac{r}{2(n-1)\gamma}$, n being the refractive index of the axicon, $\gamma$ its apex angle and r its mirror size. This expression is based on the formula expressing the angular deviation for a ray perpendicularly incident on a wedge with apex angle $\gamma$ (see Figure 1a): in the paraxial approximation (in rad) $\frac{AE}{EF}$ = tan$[(n-1)\gamma] \cong (n-1)\gamma$. The transverse dimension r makes explicitly part of this self-consistency condition. Note that in the usual case of resonators supporting Gaussian beams, the condition that rays reproduce themselves is independent of the mirror size, at least in the geometric optical limit.

In a second embodiment for a resonator configuration which emits directly a Bessel beam, the fundamental property which is exploited is the double round-trip self-consistency. The mode pattern reproduces itself only after two round trips, instead of the usual one round trip.

It has already been proven that for the usual resonators supporting Gaussian beams as lowest order mode, double round trip stability is possible in a non-trivial way. The necessary and sufficient condition is that A+D=0, A and D being the diagonal elements of the cavity round trip matrix (see Figure 1b). This translates further for an empty two-mirror cavity into

$$\left(1 - \frac{L}{R_1}\right)\left(1 - \frac{L}{R_2}\right) = 0.5,$$

whereby R1 is the front mirror radius and R2 is the rear mirror radius. As an example, take $R_1 = 2L$ and $R_2 = \infty$ (flat mirror).

Figure 2b represents the double round-trip resonator and Figure 2a represents its unfolded version. It is basically a Kepler telescope with unit magnification. Experimentally it is not obvious to excite a double round-trip mode, since the single round-trip already corresponds to a stable mode with Gaussian spot size on the plane mirror. For the double round-trip, any arbitrary Gaussian is self-reproducing, a situation which also occurs in phase conjugate resonators.

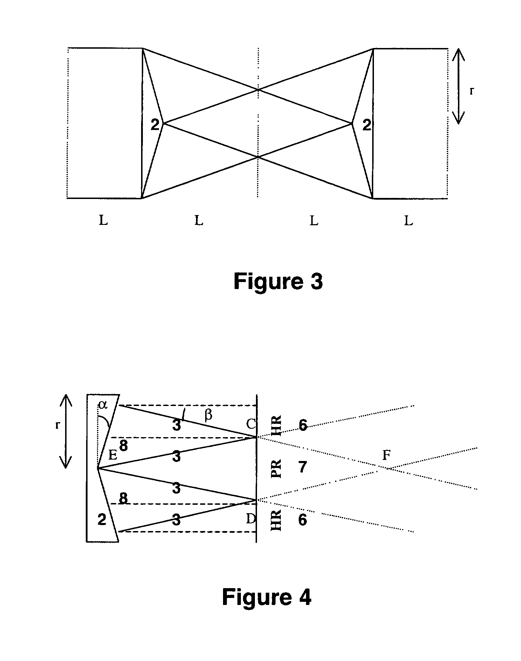

In Figure 3, the lenses 5 of Figure 2 have been replaced by axicons 2. The resonator version of this situation is given in Figure 4. The transmissive axicons 2 of Figure 3 have been substituted here by one reflective axicon 2 with apex angle $\alpha$. It can be seen that the interference zone CFDE is located half in the resonator (CDE) and half outside (CDF). The output coupler however now needs an annular high reflecting zone 6 and a central partially reflecting zone 7. The resonance condition for this resonator is $\frac{r}{4\alpha} = L$. To prove this relation, it is sufficient to observe that the apex angle α equals half of the angle β.

Note that the transverse dimension r again makes explicitly part of this condition. This means that only one mode can be generated, the one which fits this parameter. Hence, the degeneracy like existing in the usual double round trip resonator is lifted.

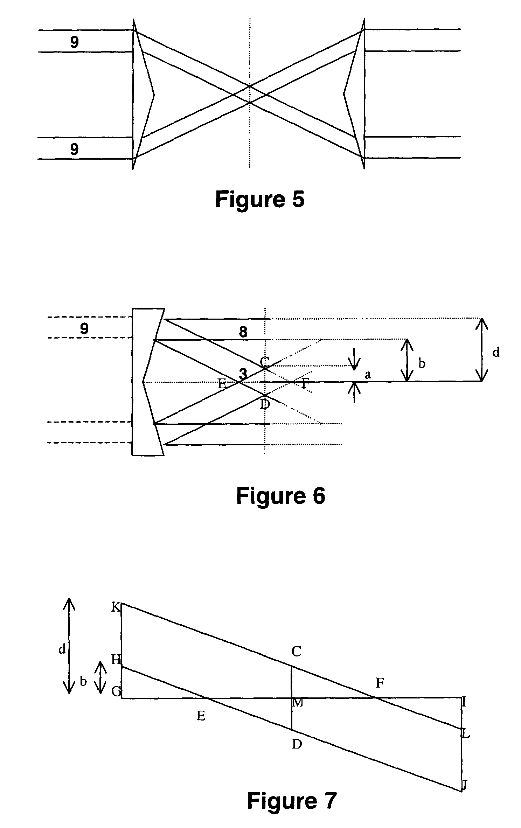

Unfortunately, not only the conical beams 3 are coupled out, also a portion of the collimated part 8 is leaving the cavity, superposed on the Bessel beam. The unfolded resonator represented in Figure 5 remedies this. The annular beams 9 converge to a central spot on the output coupler. This central spot does not overlap with the initial annular zone around it.

The folded version of the annular resonator is represented in Figure 6. To exploit the gain medium inside the resonator as much as possible (therefore the central partially reflecting zone CD must be made as large as possible), it is required that a=b, so that the collimated part 13 of the beam just touches the conical part 3.

By construction in figure 7, HG=b and IJ=d. By construction, GK=d and IL=b. Since M lies in the middle of GI, MD=HG. Now MD=KH/2, hence it follows that b = $\frac{d-b}{2}$, so this leads to the condition b = $\frac{d}{3}$.

Until now, only geometric optics arguments have been adopted to conceive the resonators. A numerical simulation should contribute evidence that Bessel beams can indeed be generated in this way. In order to realize this, the Helmholtz equation was implemented numerically, using robust and well-known algorithms. A Fox-Li like iteration procedure was then applied to the resonator structure depicted in Figure 3. Several initial conditions were used and all of them converged to the Bessel mode modulated by a Gaussian like envelope. The reason for the Gaussian-like envelope can easily be understood by recalling that the mode of a resonator with parallel mirrors is bell shaped.

A suitable normalization was used. The linearity of the Helmholtz equation ensures that the beam parameters can be scaled without affecting the physics of the final results. The cavity parameters were, transverse size 80, cavity length 20, and the axicon angle is computed using the resonance condition.

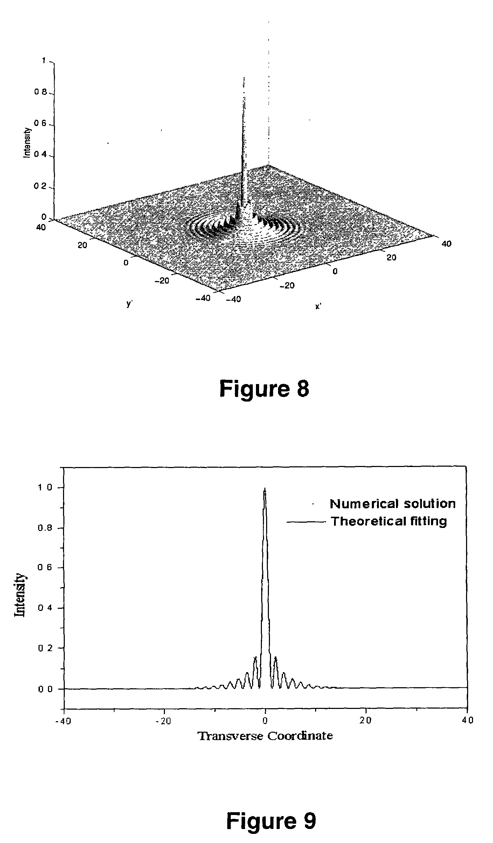

Figure 8 shows the result steady-state intensity distribution, reached after 200 cavity transits starting with a noisy initial condition. As observed graphically in Figure 9, a very close shape of a Bessel-Gauss function is achieved.

EXPERIMENT

Axicons can be manufactured using the technique of diamond point turning on a CNC-controlled lathe. Reflective axicons can be made in copper, transmissive components in $CaF_2$, ZnSe, ZnS, Ge, .... Since these are all infrared materials, the test resonator should be made for an industrial laser type, such as the Nd: YAG (Yttrium Aluminium Garnet) and the $CO_2$ laser. If a YAG-laser type is chosen, the size of the YAG-crystal should be adapted to the resonance condition of the axicon resonator. This can turn out to be impractical while only a limited number of crystal dimensions (i.e. diameter and length) is commercially available. The electric discharge of a $CO_2$ laser however can be tailored to the resonance condition. Taking the apex angle of a ZnSe axicon as 0.5 degrees, and a diameter of 17 mm, i.e. like is commercially available, the resonator length has to be 400 mm. These dimensions turn out to be suited for the construction of a CO2 gas discharge module where the gas cooling is provided by circulating the gas in closed loop through heat exchangers. A powerful roots pump takes care of the gas circulation. The gas pressure inside the discharge area was fixed at 100 mbar. A fraction of the circulating gas is continuously refreshed by pumping off with a small vacuum pump to ambient. This gas laser architecture is called "fast-axial flow" design. The gas excitation was provided by a high voltage DC power supply. The cavity was constructed on the rear end with a flat silicon total reflector in contact with the base plane of the ZnSe axicon. The axicon was provided with AR/AR (Antireflection) coatings at the laser wavelength of 10.6 micron. The front end of the cavity was a ZnSe partial reflector. Through this element, the diffraction free beam was coupled out of the resonator where it then is accessible for experimental evaluation.

In the preceding paragraphs it is assumed to use the resonator in a laser configuration whereby the wave frequency is in the range of $10^{14}$ to $10^{16}$ Hz. Resonators however also exist for acoustic fields (wave frequency in the range of 0 - 1 MHz) and for microwaves (wave frequency in the range of 10 MHz - 10 GHz). It is straightforward to extend the principles of the present invention to these fields.

In the preceding paragraphs the optical invariant field was a Bessel beam. The scope of the invention can be broadened however to any optical invariant field being generated and subsequently being transmitted, e. g. a cosinus beam.

In the preceding paragraphs it is assumed that the partially reflecting output coupler is flat. It can have a spherical shape also, and still generate an optically invariant field.

It should be apparent that the disclosure and teachings of the present invention will include alternative designs within the scope of the present invention.

## Claims

1. A device for the propagation of waves comprising two plates each having a reflecting surface, said plates lined so that said reflecting surfaces face each other to form a resonator allowing waves to pass back and forth between said reflecting surfaces, said apparatus further comprising an active amplifying medium positioned on the axis between the reflecting surfaces, said apparatus **characterized in that** at least one of said plates has a reflecting surface in the shape of an axicon.

2. The device according to claim 1, wherein the intensity distribution generated within the resonator has a Bessel mode.

3. The device according to any of the claims 1 - 2, wherein the distance L along the line up between said two optical plates is $L = \frac{r}{2(n-1)\gamma}$, whereby r is the size of the axicon-shaped optical plate, $\gamma$ is its apex angle and n its refractive index.

4. The device according to any of the claims 1 - 2, wherein the distance L between said two optical plates is $\frac{r}{4\gamma} = L$, whereby r is the size of the axicon-shaped optical plate and $\gamma$ is its apex angle.

5. The device according to any of the claims 1 - 4, wherein the apex angle $\gamma$ of the axicon is such that $tg(\gamma) \cong \gamma$.

6. The device according to any of the claims 1 - 5, wherein the reflecting surface of the rear mirror has a 100% reflection, the reflecting surface of the other plate has a partial reflection.

7. The device according to any of the claims 1 - 6, wherein said plates are preferably made of Zinc Selenide (ZnSe).

8. The device according to any of the claims 1 - 7, wherein the wave frequency is in the range of $10^{14}$ to $10^{16}$ Hz.

9. The device according to any of the claims 1 - 7, wherein the wave frequency is in the range of 10 MHz to 10 GHz.

10. The device according to any of the claims 1 - 7, wherein the wave frequency is in the range of 0 to 1 MHz.

11. The device according to any of the claims 1 - 10, wherein the active medium is either solid, liquid or gaseous.

12. The device according to claim 11, wherein the active medium is $CO_2$.

13. A method for generating a wave with an invariant intensity distribution, said method comprising the steps of:

    A) pumping energy into an active amplifying medium,
    B) allowing stimulated emission in the active amplifying medium to generate a radiation field,
    C) reinforcing the radiation field by means of a resonator,
    D) generating an invariant mode wave within the resonator by means of an axicon,
    E) propagating said invariant mode wave out of the resonator through the output coupler.

14. The method according to claim 13 performed using a device as defined in any of the claims 1 - 12.

**Figure 1a**

**Figure 1b**

**Figure 2a**

**Figure 2b**

**Figure 3**

**Figure 4**

**Figure 5**

**Figure 6**

**Figure 7**

**Figure 8**

**Figure 9**

**European Patent Office**

## EUROPEAN SEARCH REPORT

Application Number

EP 01 87 0035

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ROGEL-SALAZAR R ET AL: "Non-Diffractive Laser Resonators" CONFERENCE DIGEST: CONFERENCE ON LASERS AND ELECTRO-OPTICS EUROPE 2000, 10 - 15 September 2000, page 368 XP002178646 Nice, France * the whole document * | 1,2,4-6, 13,14 | H01S3/00 G02B5/00 |
| X | US 5 293 395 A (FOURNIER GEORGES R ET AL) 8 March 1994 (1994-03-08) * column 3, line 38 - line 57 * * figures * | 1,2,13 | |
| X | EP 0 274 223 A (LUMONICS LTD) 13 July 1988 (1988-07-13) * figure 1 * | 1,13 | |
| X | GB 2 244 851 A (WEERASINGHE VIJITHA MAITHRI ;IMPERIAL COLLEGE (GB)) 11 December 1991 (1991-12-11) * figure 1 * | 1,13 | |
| X | US 5 774 491 A (KIMURA WAYNE D ET AL) 30 June 1998 (1998-06-30) * figure 1 * | 1,13 | TECHNICAL FIELDS SEARCHED (Int.Cl.7) H01S G02B |
| X | US 5 359 622 A (SHIH CHUN-CHING) 25 October 1994 (1994-10-25) * figures 2-4 * | 1,13 | |
| X | PATENT ABSTRACTS OF JAPAN vol. 1995, no. 07, 31 August 1995 (1995-08-31) -& JP 07 106669 A (TOSHIBA CORP), 21 April 1995 (1995-04-21) * abstract * * page - * | 1,13 | |

-/--

The present search report has been drawn up for all claims

| Place of search | Date of completion of the search | Examiner |
|---|---|---|
| THE HAGUE | 27 September 2001 | Ward, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 01 87 0035

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WEERASINGHE V M ET AL: "PROPERTIES OF A LASER BEAM GENERATED FROM AN AXICON RESONATOR" OPTICS AND LASER TECHNOLOGY, ELSEVIER SCIENCE PUBLISHERS BV., AMSTERDAM, NL, vol. 21, no. 6, 1 December 1989 (1989-12-01), pages 389-391, XP000086615 ISSN: 0030-3992 * figure 1 * | 1,13 | |
| A | ARLT J ET AL: "Generation of high-order Bessel beams by use of an axicon" OPTICS COMMUNICATIONS, NORTH-HOLLAND PUBLISHING CO. AMSTERDAM, NL, vol. 177, no. 1-6, April 2000 (2000-04), pages 297-301, XP004195406 ISSN: 0030-4018 * figure 1 * | 1-3,13 | |
| A | PATENT ABSTRACTS OF JAPAN vol. 1996, no. 02, 29 February 1996 (1996-02-29) -& JP 07 261027 A (ISHIKAWAJIMA HARIMA HEAVY IND CO LTD;OTHERS: 01), 13 October 1995 (1995-10-13) * abstract; figure 4 * | 1-3,13 | TECHNICAL FIELDS SEARCHED (Int.Cl.7) |
| T | ROGEL-SALAZAR J ET AL: "Bessel-Gauss beam optical resonator" OPTICS COMMUNICATIONS, NORTH-HOLLAND PUBLISHING CO. AMSTERDAM, NL, vol. 190, no. 1-6, 1 April 2001 (2001-04-01), pages 117-122, XP004233761 ISSN: 0030-4018 * figure 3 * | 1,13 | |

The present search report has been drawn up for all claims

| Place of search | Date of completion of the search | Examiner |
|---|---|---|
| THE HAGUE | 27 September 2001 | Ward, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

11

# EP 1 233 483 A1

## ANNEX TO THE EUROPEAN SEARCH REPORT
## ON EUROPEAN PATENT APPLICATION NO.

EP 01 87 0035

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2001

| Patent document cited in search report | | Publication date | Patent family member(s) | | Publication date |
|---|---|---|---|---|---|
| US 5293395 | A | 08-03-1994 | CA | 2076735 A1 | 25-02-1994 |
| EP 0274223 | A | 13-07-1988 | EP | 0274223 A1 | 13-07-1988 |
| GB 2244851 | A | 11-12-1991 | NONE | | |
| US 5774491 | A | 30-06-1998 | NONE | | |
| US 5359622 | A | 25-10-1994 | NONE | | |
| JP 07106669 | A | 21-04-1995 | NONE | | |
| JP 07261027 | A | 13-10-1995 | NONE | | |

EPO FORM P0459

For more details about this annex : see Official Journal of the European Patent Office, No. 12/82

12